# EUROPEAN PATENT SPECIFICATION

(11) **EP 2 028 112 B1**
(45) Date of publication and mention of the grant of the patent: **09.03.2011**
(21) Application number: 07016667.3
(22) Date of filing: 24.08.2007
(51) Int. Cl.: B65D 1/34, B27D 1/08, B27G 1/00

(54) **A wooden container and a process for manufacturing thereof**
Holzbehälter und Herstellungsverfahren dafür
Conteneur en bois et son procédé de fabrication

(43) Date of publication of application: 25.02.2009
(60) Divisional application: 08002310.4
(73) Proprietor: Kabushiki Kaisha Shinrin-Shigen-Riyo-Sokushin-Kenkyusho, Osaka-shi Osaka (JP)
(72) Inventor: Kitajima, Shigeto, Hitoyoshi-shi Kumamoto-ken (JP)
(74) Representative: Hering, Hartmut

(56) References cited:
- WO-A-03/103911
- CN-A- 1 919 699
- DE-A1- 1 653 048
- DE-A1-102004 035 758
- DE-B- 1 026 947
- DE-C- 430 121
- DE-C- 819 812
- GB-A- 218 634
- JP-A- 9 099 412
- JP-A- 9 169 328
- JP-A- 10 006 308
- JP-A- 2001 030 207
- JP-A- 2002 137 203
- JP-A- 2003 054 531
- JP-A- 2007 238 171
- US-A- 4 500 573
- US-A- 5 040 582
- US-A1- 2007 221 625

## Description

The present invention relates to a wooden container as per the preamble of claim 1 and also to a process for manufacturing thereof wherein the container is formed by a plywood sheet comprising an inferior wooden sheet and a superior wooden sheet.

Such a wooden container is disclosed by JP 09 169 328 A.

It is known that a tray-like container for packing and selling food, fresh food such as fishes or vegetables for example, is formed and shaped by a foamed plastic sheet generally The container is usually in white color, a film printed with a wood-grain pattern may be laminated on the plastic sheet in order to create a high grade appearance.

Since the plastic container has a problem of waste treatment, it is desirable to spread wooden containers widely as possible which can be incinerated. In addition, wooden containers are excellent in hygroscopicity etc., they fit packing wet food. For this reason, a wooden container formed by a wooden thin plate is already proposed in prior art.

A wooden container in prior art is formed by a single wooden plate which is heated and pressed by up-and-down dies to provide a bottom wall and a peripheral wall of the container. The wooden plates for manufacturing such containers are obtained by slicing wood pieces.

High-quality wood which has few damages such as cracks for example may provide good wooden plates for manufacturing containers. However, even high-quality wood may include knots so that a container formed by such a wooden plate as obtained by the high-quality wood may also include a knot, and the container may leak moisture of wet food packed therein through the knot.

For this reason, a wooden plate having a knot cannot be used for manufacturing containers and must be discarded. It causes waste of resources.

From a viewpoint of using resources effectively, it is desirable to use not only high-quality wood but also low-quality wood obtained by trees which are produced when thinning out a forest. Usually, timbers obtained from such thinner trees are in low quality having many damaged portions as well as knots, they do not fit wood material for furniture and other wooden products, only limited uses are available, such as being used for a park bench for example, otherwise they are discarded.

JP 09 169328 A, which document is considered to represent the most relevant state of the art, discloses a wooden container comprising a plywood sheet which comprises two wooden sheets, said container being formed with a bottom wall and a peripheral wall by pressing said plywood sheet within up-and-down dies of a press apparatus. Further, this document discloses a process for manufacturing a wooden container including a bottom wall and a peripheral wall comprising: a step of providing a large number of wooden sheets by slicing wooden pieces and forming a smooth surface and a fluffy rough surface on respective sides of each wooden sheet; a step of selecting a pair of wooden sheets, and forming a plywood sheet by laying said two sheets together by contacting the respective fluffy rough surfaces; and a step of carrying out heating pressurization to said plywood sheet between male and female dies of a press apparatus under whereby said wooden container having said bottom wall and said peripheral wall is formed while gluing said two sheets by oozing lignin and moisture from wood content to said rough surfaces.

DE 819 821 C discloses barrels made of inner and outer coatings, wherein the material of the outer coating may be of less quality than the material of the inner coating.

JP 2003 054531 A discloses a food container comprising bamboo skins adhered to form more than three layers. Further, this document discloses a process for manufacturing a wooden container including a bottom wall and a peripheral wall having a surrounding edge extending along an upper edge thereof in a shape of circular extending downward in cross section comprising: a step of providing a large number of wooden sheets by slicing wooden pieces and forming a smooth surface and a fluffy rough surface on respective sides of each wooden sheet; and a step of selecting wooden sheets and forming a plywood sheet by laying said sheets together.

US-A-5 040 582 discloses a method of producing laminated veneer lumber with good dimensional stability. From this document it is known that slicing wood generates two different quality surfaces, one known as tight face and the other as a loose face.

DE 16 53 048 A1 discloses a two stage press with respect to plywood sheets, wherein walls of an intermediate product are clamped in the second stage.

DE 10 26 947 B discloses a two stage pressing device where the middle section of the first pressing stage does not have to be flat and wherein walls of an intermediate product are clamped in the second stage.

GB 218 634 A discloses a method and means for making pressed articles from wood.

It is desirable to use wooden plates obtained from thinner trees for manufacturing wooden containers. However, if the container is formed by such plate, knots as well as many damages, such as cracks, may be included so that moisture of wet food packed in the container may leak outside.

According to the inventor's knowledge, it is certainly provided two kinds of wooden sheet by slicing a whole part of timber obtained from a good-quality tree. One is a small number of inferior sheets having spoiled portions such as knots or damages represented by cracks, and another one is a large number of superior sheets having no such spoiled portion.

On the contrary, when timber obtained from a thinner tree is sliced, many inferior sheets having spoiled portions such as knots and cracks and few superior sheets having no such spoiled portion are provided.

The inventor of the present invention studied how to use wood resources effectively without discarding inferior sheets and found it advantageous to provide a wooden container having a bottom wall and a peripheral wall, the container being formed by a plywood sheet comprising an inner ply of superior sheet and an outer ply of inferior sheet.

The inferior sheet includes a spoiled portion, such as knot and crack, but it is located in outside, it does not cause trouble in the function of container. Moisture of wet food packed in the container does not leak outside, since the inside of container is formed with the superior sheet having no spoiled portion.

Thereby, in comparison with prior art in which a container is formed by one single superior plate so that any inferior plates are to be discarded without being used, the present invention makes it possible to use effectively whole part of timber including spoiled portions without discarding any part of the timber.

According to the present invention, the total thickness (t) of the plywood sheet comprising the inferior and superior sheets may be designed as substantially same to the thickness (t) of one single plate of prior art container. It contributes to save resources, without increasing the amount of wood consumption per container as compared with prior art.

The present invention provides a wooden container according to claim 1.

The present invention also provides a process for manufacturing a wooden container according to claim 1.

Preferably, the inferior and superior sheets are dried to reduce moisture in wood content before forming the plywood sheet. The reduced moisture of limited quantity may ooze to contacting surfaces of the inferior and superior sheets when heating pressurization is carried out to the plywood sheet. The reduced moisture remaining in the sheets is limited to substantially 10% to 20% under the condition that moisture contained in natural wood is considered as 100%.

According to the present invention, the contacting surfaces of the inferior and superior sheets are glued by lignin contained in wood content. However, supplementary adhesion may be added if necessary. For example, powder of starch may be applied by sprinkling on at least one of the rough surfaces of the inferior and superior sheets when joining mutually. The powder becomes paste with steam oozed from wood content when heating pressurization is carried out to the plywood sheet within the press apparatus so that the contacting surfaces of the inferior and superior sheets are glued mutually.

According to the present invention, the whole part of container is made wooden. The container can be incinerated, and the waste treatment is easy. The wooden container is excellent in hygroscopicity etc., it fits packing wet fresh food.

The wooden container is formed by a plywood sheet of a pair of wooden sheets selected from a large number of wooden sheets, one being an inferior sheet including a spoiled portion and another one being a superior sheet including no such spoiled portion. The plywood sheet is carried out with heating pressurization within a press apparatus so that the two sheets are glued together and the wooden container having a bottom wall and a peripheral wall is manufactured. Accordingly, such inferior wooden sheets are used effectively without discarding, it contributes to save resources.

According to the present invention, any parts to be discarded from wood are produced very few. Most part of the whole wood may be effectively used, and even wood obtained from thinner trees may also be used. The wooden container is manufactured at cheap cost by using such inferior sheet.

According to the present invention, the total thickness (t) of the plywood sheet comprising the inferior and superior sheets may be designed as substantially same to the thickness (t) of one single plate of prior art container. It contributes to save resources, without increasing the amount of wood consumption per container as compared with prior art.

According to the present invention, the wooden container is formed with its inside by the superior sheet and its outside by the inferior sheet.

Although the inferior sheet includes the spoiled portions, such as knots or damages represented by cracks, it does not cause trouble in the function of container since the inferior sheet forms outside wall and not inside wall of the container. The inside wall of container is formed by the superior sheet, and moisture of wet fresh food packed in the container dose not leak outside.

The plywood sheet is carried out with heating pressurization within a press apparatus. During the heating pressurization, lignin and moisture are oozed from wood content to the fluffy rough surfaces and form adhesion film by which the contacting surfaces of the inferior and superior sheets are glued mutually.

Any adhesives of organic synthetic resin are not used. It is sanitarily safe as a container for packing food, and moreover, it can contribute to environmental preservation, without generating harmful gas when incinerated. The surfaces of inside and outside of the container are made smooth, they are in good appearance, and touch is also good.

According to a preferred embodiment, a process for manufacturing a wooden container is offered wherein the peripheral wall is provided with a surrounding edge extending along an upper edge thereof in a shape of circular extending downward in cross section.

When a container packing food is wrapped by a film, the surrounding edge makes the wrapping operation easy. There are strong needs by users to use containers with such surrounding edge.

If the wooden sheets are dried so that moisture content may be made into about 10% - 20%, good adhesion is achieved only by lignin. However, the quality control is not necessarily easy, and moreover, there is inconvenience that a drying process must be practiced.

To solve the problem of such inconvenience, powder of starch may be applied by sprinkling on at least one of the rough surfaces of the inferior and superior sheets. The powder may comprise flour for example, and a small quantity is sufficient for the application amount.

When the plywood sheet that the powder is applied between the inferior and superior sheets is carried out with heating pressurization within the press apparatus, lignin and steam are oozed from wood content, then the powder becomes paste with steam, and it spreads over and forms an uniform adhesion film to glue the contacting surfaces of the inferior and superior sheets.

### Brief Description of the Drawings

- Fig. 1: (A) to Fig. 1 (C) show an embodiment of wooden container according to the present invention; Fig. 1 (A) is a perspective view of the container, Fig. 1 (B) is a longitudinal sectional view thereof, and Fig. 1 (C) is an enlarged sectional view showing a broken part of plywood sheet.
- Fig. 2: (A) to Fig. 2 (D) show a process of producing wooden sheets for manufacturing wooden containers according to the present invention: Fig. 2 (A) is an explanatory view showing a slicing step of superior sheets, Fig. 2 (B) is an explanatory view showing a slicing step of inferior sheets, Fig. 2 (C) is an explanatory view showing an expansion step of the sheets, and Fig. 2 (D) is an explanatory view showing a drying step of the sheets.
- Fig. 3: is a sectional view showing an embodiment of press apparatus.
- Fig. 4: is a sectional view showing the press apparatus wherein a first forming step to form an intermediate product is carried out.
- Fig. 5: is a sectional view showing the press apparatus wherein a second forming step to form a finished product is carried out.
- Fig. 6(A): and Fig. 6 (B) are enlarged sectional views of the press apparatus in which an adjusting plate is used; Fig. 6 (A) shows a forming step wherein a thin adjusting plate is used, and Fig. 6 (B) shows a forming step wherein a thick adjusting plate is used.

Embodiments of the present invention are described in detail by referring to drawings.

### (An embodiment of the wooden container)

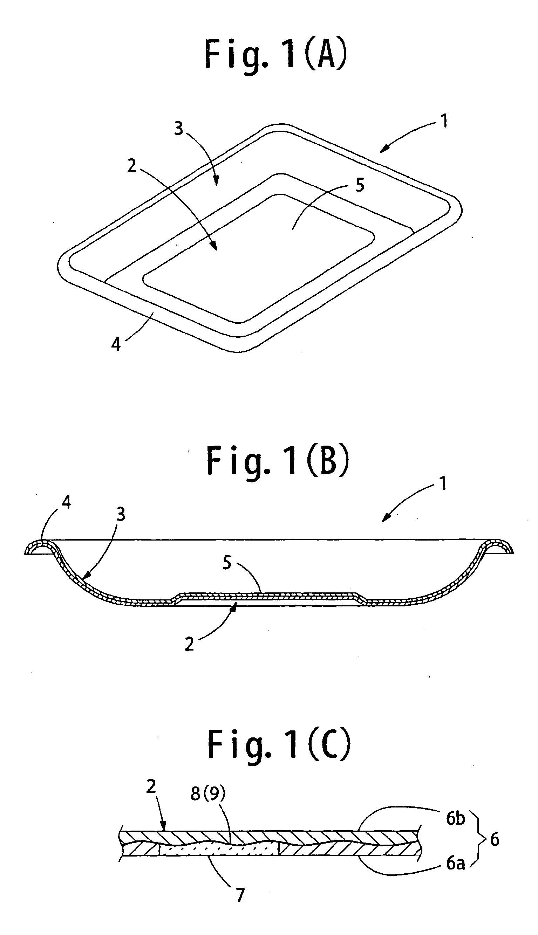

In Fig. 1, a wooden container 1 is illustrated as a tray, for example, having a bottom wall 2 and a peripheral wall 3, the tray may be shaped in either shallow or deep configuration. The tray has a surrounding edge 4 extending outside along an upper opening edge of the peripheral wall 3 and also extending downward as circular in cross section. A bulge portion 5 may be formed by slightly lifting the center of bottom wall 2 so that moisture of wet food packed in the container may stagnate below the circumference of the bulge portion 5.

The wooden container 1 is formed by a plywood sheet 6 comprising an inferior sheet 6a having spoiled portions such as knot or crack and a superior sheet 6b having no such spoiled portion. The inferior sheet 6a and the superior sheet 6b are chosen from a large number of wooden sheets obtained by slicing a wooden piece. The plywood sheet 6 lays the inferior sheet 6a and the superior sheet 6b with each other, then the plywood sheet 6 is heated and pressed by up-and-down dies. The sheets 6a and 6b are glued mutually within the dies and formed in a shape of container 1 as mentioned above.

Accordingly, the whole part of container 1 is made wooden that can be incinerated easily so that no problem of waste treatment may be caused. Since the wooden container 1 is superior in hygroscopicity etc., it is suitable for packing fresh wet food.

As shown in Fig. 1 (B) and Fig. 1 (C), the wooden container 1 is constructed such that an inner wall is formed with said superior sheet 6b and an outside wall is formed with said inferior sheet 6a.

As illustrated in Fig. 1 (C), the inferior sheet 6a includes spoiled portions 7 such as knots and cracks or the like. However, no trouble for packing function of the container is caused, since the inferior sheet 6a is located in outside wall of the container.

On the other hand, the inside of container is formed with the superior sheet 6b having no spoiled portion, and moisture of fresh food packed in the container does not leak outside.
The inferior sheet 6a and the superior sheet 6b, which constitute the plywood sheet 6, provide respective opposite sides with smooth surfaces but provide respective contact sides with rough surfaces 8 as shown in Fig. 1 (C). Adhesion is carried out by adhesion film 9 formed between the contacted rough surfaces 8. The adhesion film 9 is made by lignin oozed from wood content to the rough surfaces 8 during a heating pressing process as mentioned later.

### (An embodiment of a process for manufacturing the container) (Slicing step)

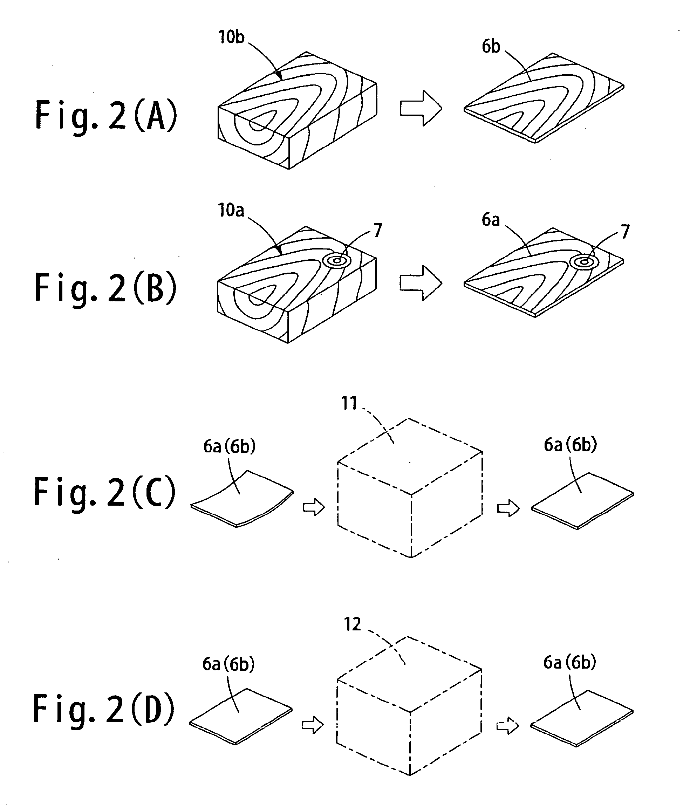

As shown in Fig. 2 (A), many superior sheets 6b are formed by slicing a good-quality wooden piece 10b. The sliced superior sheet 6b is formed one side with a smooth surface and another side with a fluffy rough surface. A slice direction of the wood piece 10b is set up so that grain may appear in the surface of superior sheet 6b beautiful.

In the present invention, even low-quality wood 10a containing spoiled portions 7, such as knot or crack, is used effectively without being discarded. That is, as shown in Fig. 2 (B), many inferior sheets 6a are formed by slicing a low-quality wooden piece 10a. The sliced inferior sheet 6a is formed one side with a smooth surface and another side with a fluffy rough surface. A slice direction of the wood piece 10a is set up so that grain may appear in the surface of inferior sheet 6a beautiful.

### (Expansion step)

The inferior sheet 6a and the superior sheet 6b may be distorted to an arch shape due to rotating cutters of slicing device. The distortion is corrected by inserting the sheets 6a and 6b through a pair of press rollers (not shown) of expansion device 11, as shown in Fig. 2 (C).

### (Drying step)

Subsequently, the sheets 6a and 6b are decreased in moisture contained in wood content by drier 12, as shown in Fig. 2 (D).

Under the condition that moisture contained in natural wood is considered as 100%, the sheets 6a and 6b are dried so that the moisture remains substantially 10% to 20%, preferably about 15%. In order to dry in short time, a heater is provided in the drier 12. The drier 12 may provide a zigzag-like passage through which the sheets 6a and 6b run in the predetermined distance. By controlling the heater and the running speed of the sheets 6a and 6b, it is possible to dry the sheets 6a and 6b remaining the limited moisture as mentioned above.

### (First forming step)

A pair of inferior sheet 6a and superior sheet 6b is chosen from a large number of sheets obtained as mentioned above. The sheets 6a and 6b are laid by contacting both rough surfaces 8 mutually to provide a plywood sheet 6.

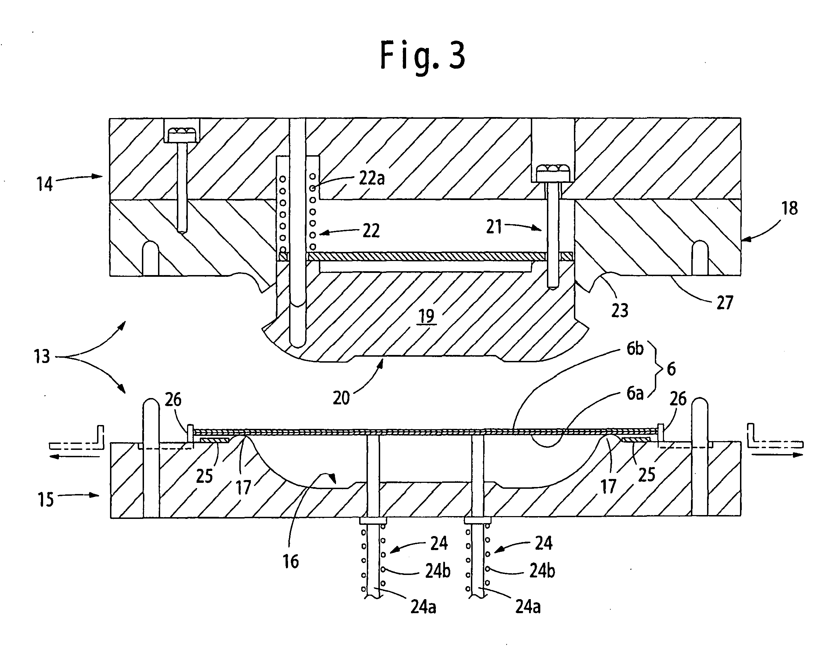

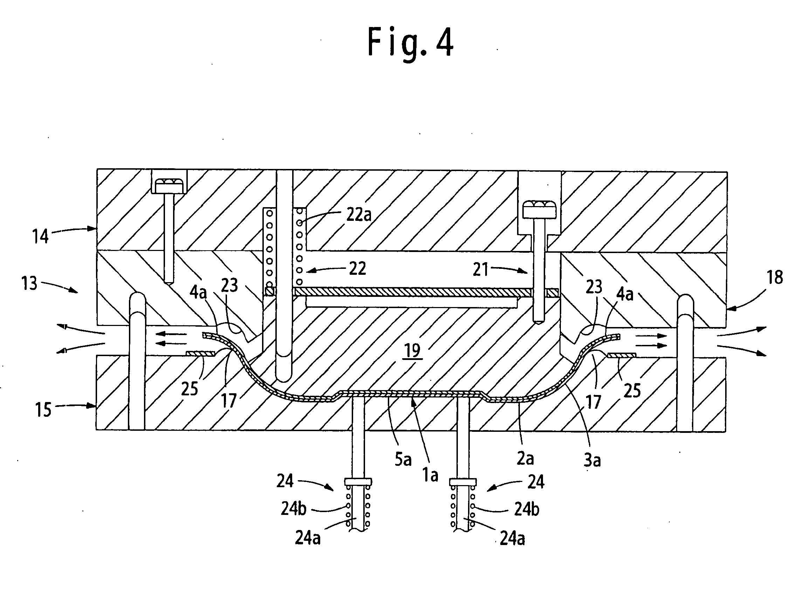

The plywood sheet 6 is heated and pressed by a press apparatus 13 as shown in Fig. 3 to produce an intermediate processed container product 1a (see Fig. 4).

When skipping the above mentioned drying step, or even when performing such drying step, powder of starch may be applied by sprinkling, if needed, on at least one of the rough surfaces 8 of the inferior sheet 6a and the superior sheet 6b. The powder may comprise flour for example, and a small quantity is sufficient for the application amount.

The press apparatus 13 forms, as a first forming step, an intermediate processed container product 1a (herein called as "intermediate product") which is provided with a bottom wall 2a and a peripheral wall 3a as shown in Fig. 4. However, an edge portion 4a is extended upwardly from the peripheral wall 3a. The center part of bottom wall 2a is slightly lifted to provide a bulge portion 5a preferably.

As shown in Fig. 3, the press apparatus 13 comprises a male die 14 shown as an upper die, and a female die 15 shown as a lower die. A driving source (not shown) is provided to open and close both dies 14 and 15.

The female die 15 has a concave 16 in a shape corresponding to the outside of said intermediate product 1a, i.e., corresponding to the outside of the bottom wall 2a including the bulge portion 5a and the peripheral wall 3a. An annular projection 17 is formed with the female die 15 at an opening edge of the concave 16. The annular projection 17 is in an arch-shape in cross section and extends outwardly from the concave 16.

The male die 14 comprises a main die 18 and a moving die 19. The moving die 19 is movable in forward and backward directions towards the female die 15 and is provided with a convex 20 in a shape corresponding to the inside of said intermediate product 1a, i.e., corresponding to the inside of the bottom wall 2a including the bulge portion 5a and the peripheral wall 3a.

The moving die 19 is guided by guide means 21 to move in forward and backward directions and is usually pushed by pushing means 22 having a spring 22a so that the moving die 19 projects from the main die 18.

For manufacturing the intermediate product 1a, the convex 20 of the moving die 19 forms the bottom wall 2a and the peripheral wall 3a at the same time, however, said edge portion 4a is not pressed by the convex 20.

The main die 18 provides an annular groove 23 of which surface fits in a smooth manner to the peripheral edge of the convex 20 of the moving die 19 when the moving die 19 is moved fully backward.

The female die 15 has support means 24 projecting in the concave 16. The support means 24 comprises rods 24a inserted through the female die 15 and springs 24b pushing the rods 24a towards the male die 14. The rods 24a are movable in forward and backward directions and are usually pushed by the springs 24b to advance into the concave 16 but stop at a position that each end of the rods 24a comes at same level of the height of said annular projection 17.

An adjusting plate 25 is attached detachably to the female die 15 at the portion surrounding the annular projection 17, and positioning means 26 is provided at outside the adjusting plate 25. As shown in Fig. 3, the positioning means 26 is movable between a position close to the adjusting plate 25 as shown by a solid line in Fig. 3 and a position away from the female die 15 as shown by a chain line in Fig. 3.

Exhaust means 27 is provided on opposite faces of the male main die 18 and the female die 15. The exhaust means 27 is illustrated as being provided on the opposite faces, however, it may be formed by slot passages provided on at least one of the opposite faces, or by bore passages provided through at least one of the male and female dies.

As shown in Fig. 3, under the state that the press apparatus 13 is opened, the plywood sheet 6 is inserted between the up-and-down dies 14, 15 in such manner that the superior sheet 6b faces the male die 14 and the inferior sheet 6a faces the female die 15. As for the two sheets 6a and 6b comprising the plywood sheet 6, it is preferred to make the grains cross mutually.

When the plywood sheet 6 is put on the annular projection 17 of the female die 15, the positioning means 26 is positioned close to the projection 17 so that the periphery of the sheet 6 is restrained to be positioned at the predetermined position with respect to the female die 15. The center region of plywood sheet 6 is supported at the undersurface by support means 24, the sheet 6 does not bend downward.

Evacuating the positioning means 26 out of dies, as shown in Fig. 4, the dies 14 and 15 are closed and heating pressurization to the plywood sheet 6 is carried out to form the intermediate product 1a.

When the male die 14 and the female die 15 are closed, the plywood sheet 6 is pressed by the convex 20 of the moving die 19 towards the concave 16 of the female die 15, and the plywood sheet 6 is deformed between the convex 20 and the concave 16, while the moving mold 19 being projected by pushing means 22.

As the moving die 19 gets closer to the female die 15, the moving die 19 is retreated in the main die 18 against the spring 22a of the pushing means 22 while guided by the guide means 21. The convex 20 of the moving die 19 deforms the plywood sheet 6 and pushes it into the concave 16, while the undersurface of the sheet 6 is supported by the rods 24a which retreat from the concave 16 against the spring 24b.

The male die 14 and the female die 15 carry out the first forming step of the plywood sheet 6 where the dies 14 and 15 are not closed completely but are opened a little as shown in Fig. 4. The plywood sheet 6 is formed with the bottom wall 2a and the peripheral wall 3a to provide the intermediate product 1a between the concave 16 and the convex 20. The moving die 19 is pushed by the spring 22a of the pushing means 22 so that the plywood sheet 6 is clamped in the concave 6 and heating pressurization to the plywood sheet 6 is carried out.

In the first forming step, the annular groove 23 of the male main die 18 and the annular projection 17 of the female die 15 are apart mutually, therefore the edge portion 4a of the intermediate product 1a is not pressed. Thus, the first forming step forms the intermediate product 1a with only the bottom wall 2a and the peripheral wall 3. It does not cause the plywood sheet 6 any strong stress, and neither distortion nor a crack is produced.

The first forming step is carried out for several seconds, about 2 to 3 seconds for example, and the plywood sheet 6 is heated and pressed to form the intermediate product 1a. The lignin and moisture in wood content of the plywood sheet 6 become steam and ooze to the rough surfaces 8 to glue together.

When powder of starch is applied to one of the rough surfaces as mentioned above, it becomes paste with steam, and it spreads over the rough surfaces 8 and glues together.

Steam generated during the first forming step is discharged out of the press apparatus 13 via exhaust means 27.

### (Second forming step)

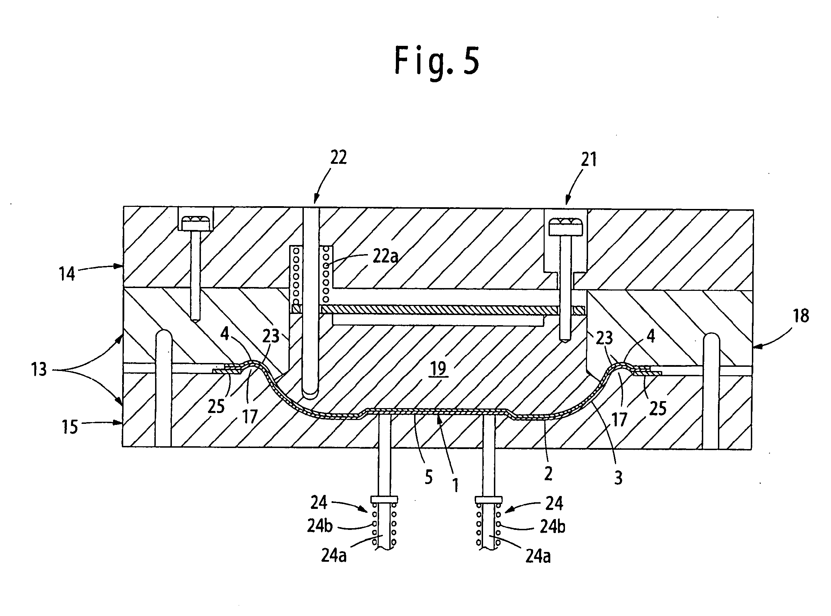

Subsequently, the press apparatus 13 is closed until the male die 14 and the female die 15 are brought in a complete clamp state to carry out a second forming step as shown in Fig. 5. Here, heating pressurization is performed again to the intermediate product 1a, and a finished container product 1 is produced.

In the second forming step, the annular projection 17 of the female die 15 and the annular groove 23 of the male main die 18 are closed mutually, while the moving die 19 is retreated in the main die 18 so as to meet the peripheral edge of the convex 20 with the annular groove 23. The edge portion 4a, which has not been pressed during the first forming step, is now heated and pressed to be shaped in a downward circle shape in cross section, thereby a surrounding edge 4 is formed.

In the second forming step, the intermediate product 1a is clamped again while forming the surrounding edge 4. The bottom wall 2a and the peripheral wall 3a are firmly clamped stronger than the clamping operation in the first forming step. Therefore, the plywood comprising the finished container product 1 is stiffened firmly, and its intensity is improved. In addition, even in case that the intermediate product 1a obtained by the first forming step includes distortion of a twist and the like in the bottom wall 2a or the peripheral wall 3a, such distortion is corrected by the second forming step.
A potential problem may be included in the second forming step that a crack is produced depending on the wood quality, when pressing the edge portion 4a of the intermediate product 1a to form the surrounding edge 4 of the finished container product 1. Such a crack has the tendency to be easy to generate if the upheaval of surrounding edge 4 becomes remarkable, in other words, the curvature radius of surrounding edge 4 becomes small.

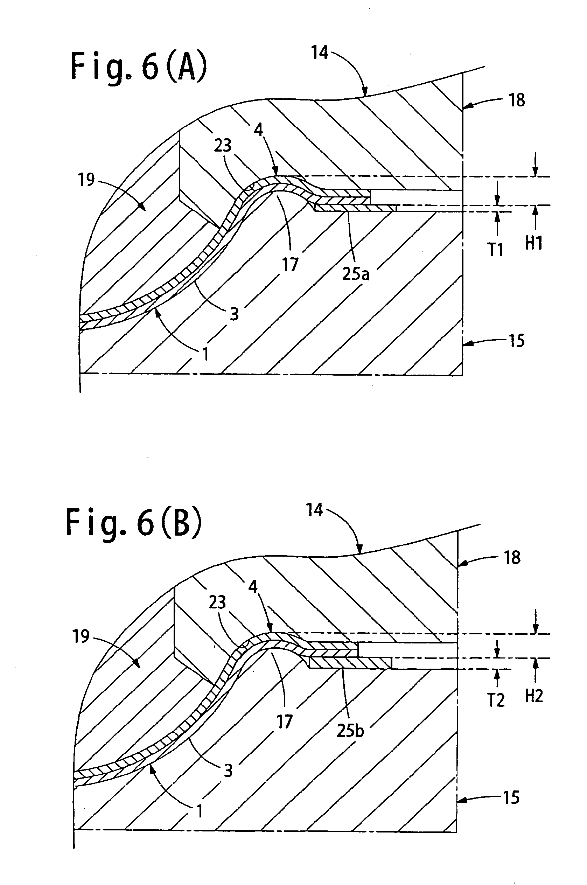

For this reason, the press apparatus 13 provides the female die 15 with the adjusting plate 25 at outside portion near the periphery of annular projection 17. It is preferred that plural plates having different thicknesses are prepared to be selectively used, such as a first adjusting plate 25a of comparatively small thickness T1 (2mm in thickness for example) as shown in Fig. 6 (A), and a second adjusting plate 25b of comparatively large thickness T2 (3mm in thickness for example). Each adjusting plate 25 forms an annular frame like configuration surrounding the outside of annular projection 17 and is attached on the female die 15 detachably.

The adjusting plate 25 may be removed when the second forming step is carried out. In case that no adjusting plate is attached, the surrounding edge 4 formed by the edge portion 4a of the intermediate product 1a becomes highest with respect to its height H.

If it seems that the surrounding edge 4 breaks in that condition, the first adjusting plate 25a of small thickness T1 is attached as shown in Fig. 6 (A), and the second forming step is carried out. Thereby, the problem of causing cracks may be solved since the surrounding edge 4 to be formed by the edge portion 4a is made its height H1 lower than the case where the adjusting plate 25a is not provided.

If it further seems that the surrounding edge 4 still breaks even the first adjusting plate 25a attached, it is replaced with the second adjusting plate 25b of large thickness T2 (namely, T2>T1) as shown in Fig. 6 (B), and the second forming step is carried out. The problem of causing cracks will be solved since the surrounding edge 4 to be formed by the edge portion 4a is made its height H2 further lower than the case where the first adjusting plate 25a is attached (namely, H2<H1).

Although two or more kinds of adjusting plates 25a and 25b which have different thicknesses may be provided for selective use as mentioned above, plural adjusting plates of the same thickness may be also used to achieve adjusting of the height H by piling up the plates.

The foregoing embodiment which performs two steps of the first forming step and the second forming step corresponds to the invention defined in claim 3. It is not always necessary for the invention to perform two forming steps in accordance with the invention defined in claim 2.
In case that a wooden container having no surrounding edge 4 is manufactured for example, the container may be formed by pressing a plywood sheet 6 only by one forming step of the press apparatus 13.

## Claims

1. A wooden container for packing wet food comprising a bottom wall (2) and a peripheral wall (3) formed by pressing and heating a plywood sheet (6) within up-and-down dies of a press apparatus **characterized in that**:
said plywood sheet (6) comprises an inferior wooden sheet (6a) having at least one spoiled portion (7) such as knots or damages represented by cracks and a superior wooden sheet (6b) having no such spoiled portion, and said superior wooden sheet (6b) forms an inside of the container and said inferior wooden sheet (6a) forms an outside of the container so that said superior wooden sheet (6b) prevents moisture of food packed in the container from leaking outside, and
said inferior and superior wooden sheets (6a, 6b) are glued mutually by lignin which is oozed from wood content to contacting surfaces of said sheets (6a, 6b) when said plywood sheet (6) is pressed and heated between the up-and-down dies.

2. A process for manufacturing a wooden container for packing wet food as defined in claim 1, comprising:
a step of providing a large number of wooden sheets by slicing wooden pieces and forming a smooth surface and a fluffy rough surface (8) on respective sides of each wooden sheet;
a step of forming a plywood sheet by laying two wooden sheets, and
a step of carrying out heating pressurization to said plywood sheet between male and female dies of a press apparatus to form said wooden container, **characterized in that**:
said wooden sheets are dried to reduce moisture in wood content to a limited quantity in advance of forming the plywood sheet (6),
said plywood sheet (6) is formed in such manner that a pair of wooden sheets selected, one being an inferior sheet (6a) including at least one spoiled portion (7) such as knots or damages represented by cracks and another one being a superior sheet (6b) including no such spoiled portion, are laid together by contacting the respective fluffy rough surfaces (8) so that an inside of the container is formed by said superior sheet (6b) and an outside of the container is formed by said inferior wooden sheet (6a), and
said heating pressurization is carried out in such a manner that said moisture of limited quantity oozes together with lignin from wood content to the mutual fluffy rough surfaces (8, 8) so that said rough surfaces are glued by said lignin.

3. A process for manufacturing a wooden container for packing wet food according to claim 2, wherein said wooden container forms a surrounding edge (4) extending along an upper edge of the peripheral wall (3) in a shape of circular extending downward in cross section, wherein
said step of carrying out heating pressurization comprises a first forming step and a second forming step wherein:
said first forming step produces an intermediate product (1 a) by carrying out heating pressurization to said plywood sheet (6) on its center region except its peripheral region in such a manner that said plywood sheet (6) is formed with a bottom wall (2a) and a peripheral wall (3a) having an edge portion (4a) extending upwardly therefrom, and moisture of limited quantity oozes together with lignin from wood content to the contacted fluffy rough surfaces (8, 8) of the sheets (6a, 6b); and
said second forming step produces a finished product (1) by carrying out further heating pressurization to said intermediate product (1a) by clamping entire part thereof in such a manner that said edge portion (4a) is formed with said surrounding edge (4) while said bottom and peripheral walls (2a, 3a) are firmly clamped stronger than the clamping operation in the first forming step so that said walls (2a, 3a) are stiffened firmly to improve intensity, thereby the wooden container (1) as the finished product formed with said stiffened bottom and peripheral walls (2, 3) and said surrounding edge (4) is produced.

4. A process for manufacturing a wooden container for packing wet food according to claim 2 or 3, wherein the moisture in said inferior and superior sheets (6a, 6b) after dried is made into substantially 10% to 20% under the condition that moisture contained in natural wood is made as 100%.

## Patentansprüche

1. Holzbehälter zum Einpacken feuchter Nahrung mit einer Bodenwand (2) und einer Umfangswand (3), die durch Pressen und Erhitzen einer Sperrholzplatte (6) innerhalb von auf- und absteigenden Pressbacken einer Pressvorrichtung ausgebildet sind, **dadurch gekennzeichnet, dass**:
die Sperrholzplatte (6) eine minderwertigere Sperrholzplatte (6a) mit wenigstens einem verdorbenen Teilbereich (7), wie beispielsweise Ästen oder Beschädigungen, die durch Bruchstellen verkörpert sind, und eine höherwertigere Sperrholzplatte (6b) ohne einen solchen verdorbenen Teilbereich aufweist, und die höherwertigere Sperrholzplatte (6b) eine Innenseite des Behälters ausbildet und die minderwertigere Sperrholzplatte (6a) eine Außenseite des Behälters ausbildet, so dass die höherwertigere Sperrholzplatte (6b) verhindert, dass Feuchtigkeit von in dem Behälter eingepackter Nahrung nach außen austritt, und
die minderwertigere und die höherwertigere Sperrholzplatte (6a, 6b) wechselseitig durch Lignin verklebt sind, das vom Holzgehalt zu kontaktierenden Oberflächen der Platten (6a, 6b) entweicht, wenn die Sperrholzplatte (6) zwischen den auf- und absteigenden Pressbacken gepresst und erhitzt wird.

2. Verfahren zum Herstellen eines Holzbehälters zum Einpacken feuchter Nahrung nach Anspruch 1, das folgendes aufweist:
einen Schritt zum Bereitstellen einer großen Anzahl von Holzplatten durch Schneiden von Holzstücken in Scheiben und Ausbilden einer glatten Oberfläche und einer flockigen, groben Oberfläche (8) auf jeweiligen Seiten jeder Holzplatte;
einen Schritt zum Ausbilden einer Sperrholzplatte durch Hinlegen zweier Holzplatten, und
einen Schritt zum Ausführen einer erhitzenden Pressbeaufschlagung an der Sperrholzplatte zwischen vorstehender und aufnehmender Pressbacke einer Pressvorrichtung, um den Holzbehälter auszubilden, **dadurch gekennzeichnet, dass**:
die Holzplatten getrocknet werden, um vor einem Ausbilden der Sperrholzplatte (6) Feuchtigkeit im Holzgehalt auf eine begrenzte Menge zu reduzieren,
die Sperrholzplatte (6) auf derartige Weise ausgebildet wird, dass ein Paar ausgewählter Holzplatten, von welchen eine eine minderwertigere Platte (6a) mit wenigstens einem verdorbenen Teilbereich (7), wie beispielsweise Ästen oder Beschädigungen, die durch Bruchstellen verkörpert sind, ist und eine andere eine höherwertigere Platte (6b) ohne einen solchen verdorbenen Teilbereich ist, durch Kontaktieren der jeweiligen flockigen, groben Oberflächen (8) so zusammengelegt werden, dass eine Innenseite des Behälters durch die höherwertigere Platte (6b) ausgebildet wird und eine Außenseite des Behälters durch die minderwertigere Holzplatte (6a) ausgebildet wird, und
die erhitzende Pressbeaufschlagung auf derartige Weise ausgeführt wird, dass die Feuchtigkeit begrenzter Menge zusammen mit Lignin vom Holzgehalt zu den wechselseitigen flockigen, groben Oberflächen (8, 8) entweicht bzw. durchsickert, so dass die groben Oberflächen durch das Lignin verklebt werden.

3. Verfahren zum Herstellen eines Holzbehälters zum Einpacken feuchter Nahrung nach Anspruch 2, wobei der Holzbehälter einen umgebenden Rand (4) ausbildet, der sich entlang einem oberen Rand der Umfangswand (3) in einer Form eines Umlaufs erstreckt, der sich im Querschnitt nach unten erstreckt, wobei
der Schritt zum Ausführen einer erhitzenden Pressbeaufschlagung einen ersten Ausbildungsschritt und einen zweiten Ausbildungsschritt aufweist, wobei:
der erste Ausbildungsschritt ein Zwischenprodukt (1a) erzeugt, indem eine erhitzende Pressbeaufschlagung an der Sperrholzplatte (6) an ihrem zentralen Bereich außer ihrem Umfangsbereich auf derartige Weise ausgeführt wird, dass die Sperrholzplatte (6) mit einer Bodenwand (2a) und einer Umfangswand (3a) mit einem Randteilbereich (4a), der sich davon nach oben erstreckt, ausgebildet wird, und Feuchtigkeit einer begrenzten Menge zusammen mit Lignin vom Holzgehalt zu den kontaktierten flockigen, groben Oberflächen (8, 8) der Platten (6a, 6b) durchsickert; und
der zweite Ausbildungsschritt ein Endprodukt (1) erzeugt, indem eine weitere erhitzende Pressbeaufschlagung an dem Zwischenprodukt (1a) durch Klemmen eines gesamten Teils davon auf derartige Weise ausgeführt wird, dass der Randteilbereich (4a) mit dem umgebenden Rand (4) ausgebildet wird, während die Wände (2a, 3a) am Boden und am Umfang stärker als bei der Klemmoperation in dem ersten Ausbildungsschritt fest geklemmt werden, so dass die Wände (2a, 3a) fest versteift werden, um eine Intensität zu verbessern, wodurch der Holzbehälter (1) als das Endprodukt, das mit den versteiften Wänden (2, 3) am Boden und am Umfang und dem umgebenden Rand (4) ausgebildet ist, erzeugt wird.

4. Verfahren zum Herstellen eines Holzbehälters zum Einpacken feuchter Nahrungsmittel nach Anspruch 2 oder 3, wobei veranlasst wird, dass die Feuchtigkeit in der minderwertigeren und der höherwertigeren Platte (6a, 6b), nachdem sie getrocknet sind, unter der Voraussetzung, dass veranlasst ist, dass in natürlichem Holz enthaltene Feuchtigkeit 100% ist, im Wesentlichen 10% bis 20% ist.

## Revendications

1. Récipient en bois pour le conditionnement d'aliments liquides comprenant une paroi de fond (2) et une paroi périphérique (3) formées par pression et chauffage d'une feuille de contreplaqué (8) entre des matrices à mouvement vers le haut et vers le bas d'un appareil à presse **caractérisé en ce que**
ladite feuille de contre-plaqué (6) comprend une feuille en bois inférieure (6a) ayant au moins une portion (7) altérée, telle que des noeuds ou des défectuosités représentées par des fissures et une feuille en bois supérieure (6b) n'ayant pas de portion altérée de la sorte, ladite feuille en bois supérieure (6b) formant l'intérieur du récipient et ladite feuille en bois inférieure (6a) formant l'extérieur du récipient de manière que ladite feuille en bois supérieure (6b) empêche l'humidité de l'aliment conditionné dans le récipient de passer à l'extérieur et
lesdites feuilles de bois inférieure et supérieure (6a, 6b) sont collées l'une à l'autre par de la lignine qui a exsudé du bois et est entré en contact avec les surfaces desdites feuilles (6a, 6b), lorsque la feuille de contre-plaqué (6) est pressée et chauffée entre les matrices à mouvement vers le haut et vers le bas.

2. Procédé de fabrication d'un récipient en bois pour le conditionnement d'aliments liquides tel que défini à la revendication 1, comprenant :
une étape qui consiste à mettre à disposition un grand nombre de feuilles en bois en tranchant des morceaux en bois et en réalisant une surface lisse et une surface rugueuse pelucheuse (8) sur des faces respectives de chaque feuille en bois,
une étape qui consiste à former une feuille de contre-plaqué en posant deux feuilles en bois, et
une étape qui consiste à exercer une pression chauffante sur ladite feuille de contre-plaqué entre des matrices mâle et femelle d'un appareil de presse, afin de former ledit récipient en bois, **caractérisé en ce que** :
lesdites feuilles en bois sont séchées préalablement à la formation de la feuille de contre-plaqué (6), afin de réduire la teneur en humidité du bois à une quantité limitée.
ladite feuille de contreplaqué (6) est formée de manière qu'une paire de feuilles en bois sélectionnées, dont l'une constitue la feuille inférieure (6a) qui inclut au moins une portion altérée (7), telle que des noeuds ou des défectuosités représentées par des fissures, et dont l'autre constitue la feuille supérieure (6b) qui n'inclut pas de portion altérée de la sorte, sont posées l'une contre l'autre, en mettant en contact les surfaces rugueuses pelucheuses respectives (8) de sorte qu'un intérieur de récipient est formé par ladite feuille supérieure (6b) et qu'un extérieur de récipient est formé par ladite feuille de bois inférieure (6a), et
ladite pression chauffante est exercée de manière que ladite quantité limitée d'humidité exsude ensemble avec de la lignine du bois dans lesdites surfaces rugueuses pelucheuses respectives (8, 8), de sorte que lesdites surfaces rugueuses sont collées par ladite lignine.

3. Procédé de fabrication d'un récipient en bois pour le conditionnement d'aliments liquides suivant la revendication 2, dans lequel ledit récipient en bois présente un bord entourant (4) qui s'étend le long d'une arête supérieure de la paroi périphérique (3) de manière à s'étendre dans la forme d'une extension circulaire vers le bas, en section transversale, procédé, dans lequel
ladite étape consistant à exercer une pression chauffante se compose d'une première et d'une seconde étape de formage :
ladite première étape de formage permettant d'obtenir un produit intermédiaire (1 a) en exposant la feuille de contre-plaqué (6) à la pression chauffante au niveau de sa zone centrale à l'exception de sa zone périphérique de manière que ladite feuille de contreplaqué (6) est formée avec une paroi de fond (2a) et une paroi périphérique (3a), depuis laquelle une portion de bord (4a) s'étend de manière à se dresser vers le haut, et la quantité limitée d'humidité exsude ensemble avec de la lignine du bois dans les surfaces rugueuses pelucheuses (8, 8) des feuilles (6a, 6b) mises en contact, et
ladite seconde étape de formage permettant d'obtenir un produit fini (1) en exposant ledit produit intermédiaire (1a) entièrement à une autre pression chauffante de manière que ladite portion de bord (4a) est formée avec ledit bord entourant (4), pendant que lesdites parois de fond et périphérique (2a, 3a) sont fermement serrées avec une force supérieure à celle de l'opération de serrage de la première étape de formage, de sorte que lesdites parois (2a, 3a) sont rigidifiées fermement, afin d'améliorer la densité. Ainsi est fabriqué le récipient en bois (1) en tant que produit fini avec lesdites parois de fond et périphérique rigidifiées (2, 3) et ledit bord entourant (4).

4. Procédé de fabrication d'un récipient en bois pour le conditionnement d'aliments liquides suivant la revendication 2 ou 3, dans lequel l'humidité restant dans lesdites feuilles inférieure et supérieure (6a, 6b) après séchage est ramenée à une valeur essentiellement comprise entre 10 et 20% à la condition que l'humidité contenue dans le bois naturel soit considérée comme étant égale à 100%.
